# EUROPEAN PATENT APPLICATION

(11) **EP 1 375 362 A1**
(43) Date of publication of application: **02.01.2004**
(21) Application number: 03254090.8
(22) Date of filing: 27.06.2003
(51) Int. Cl.: B65D 5/42

(54) **Container on wheels**

(30) Priority: 27.06.2002 GB 0214914
(71) Applicant: Carrier, Graham, Stevenage, Hertfordshire SG1 4RU (GB)
(72) Inventor: Carrier, Graham, Stevenage, Hertfordshire SG1 4RU (GB)
(74) Representative: Fairbairn, Angus Chisholm

(57) **Abstract**

A mobile collapsible box container is provided comprising: a box 1 having, in the erected configuration, opposed front and back surfaces 1a, 1b, opposed side surfaces 1c, and opposed top and bottom surfaces 1d, 1e; wheels 2 mounted on the side surfaces 1c proximate to the back and bottom surfaces 1b, 1e; and a handle 3 provided in or proximate to the top surface 1d. The box 1, preferably made of corrugated cardboard, is collapsible to a substantially flat configuration for convenient storage and transport and erectable to a rigid structure which can conveniently be tilted and wheeled from one location to another.

## Description

This invention relates to a collapsible container, such as a box or carton, having wheels and a handle.

Collapsible containers including boxes and cartons made of conventional flat board materials such as cardboard or plastic sheet, cardboard or plastic corrugated board or plywood, are well known as packaging or storage means. These containers have the advantage of being cheap to manufacture, lightweight, convenient to store or transport when collapsed or folded to a substantially flat state, and easily erected to a rigid structure for use. However, once erected, these containers may be inconvenient or difficult for a person to drag, push, or lift and carry from one location to another, particularly when containing heavy contents. Moving heavy containers from one place to another by a person at best requires heavy physical exertion and at worst can cause back strain or other physical damage.

Also known are various mobile containers that have wheels, such as so-called wheeliebins or trolley bags and suitcases. These can be stood upright for insertion or removal of contents, and conveniently transported by tilting the weight onto the wheels before rolling to a desired location. However, these mobile containers are generally not collapsible to a substantially flat configuration and erectable to a rigid structure, and are significantly more costly to manufacture than collapsible containers such as cardboard boxes.

The present invention provides a container which is collapsible to a substantially flat configuration and erectable to a rigid structure which can conveniently be tilted and wheeled from one location to another.

Accordingly, the present invention provides a mobile collapsible box container comprising:
a box having, in the erected configuration, opposed front and back surfaces, opposed first and second side surfaces, and opposed top and bottom surfaces;
a first wheel mounted on the first side surface proximate to the back and bottom surfaces;
a second wheel mounted on the second side surface proximate to the back and bottom surfaces; and
a handle provided in or proximate to the top surface.

The box may be made of any suitable flat board material such as cardboard sheet, corrugated cardboard, plastic sheet, or plastic corrugated board. Preferably, the box is made of corrugated cardboard. The box is preferably formed of a single, folded, integral sheet of the flat board material, but could be formed of two or more integral sheet glued or stapled together in conventional manner.

The wheels are mounted on the side surfaces at a position near to the comers at the bottom and back of the box, so as to enable the box to be tilted from an upright position to a position in which the box is fully supported by the wheels. It will be appreciated that the wheels can be mounted at positions on the side surfaces so that, when in the upright position, the box is either unsupported by the wheels or partially supported by the wheels. If desired, one or more additional support wheels, or short support legs, can be provided at the bottom of the box, remote from the bottom back comers.

The top surface of the box may be formed of overlapping flaps extending from any or all of the back, front and side surfaces, in conventional manner, or the top surface may simply be open ended. However, preferably the top surface is formed by a flap extending from the back surface towards the front surface, herein referred to as the top flap. The top flap is pivotable about the top back edge, i.e. the edge where the top surface adjoins the back surface, and is foldable onto itself along a fold line in the top flap parallel to the top back edge. First and second slotted cut-outs are preferably provided in the top flap, one on each side of the fold line, so as to overlie one another to define the handle when the top flap is folded onto itself along the fold line. Thus, the top flap can be either pivoted unfolded towards the front surface to close off the open top end of the box, or pivoted upwards and folded onto itself to form a handle extension from the back surface to enable a person to pull the container along the ground in the manner of a conventional shopping trolley bag or wheelie-bin. If desired, additional flaps can be provided extending from the side surfaces along the top side edges which, when folded towards the opposite side surface, will lock the folded portion of the top flap into position against itself. Suitable co-operating retention means may be provided to retain the top flap, when unfolded, over the open top end of the box to close off the box. For example, the front surface may be provided with a tongue extension insertable in a slit provided in the extreme end of the top flap, or vice-versa, thereby to secure the top flap to the front surface of the box. Other locking and retention means will be apparent to those skilled in the art.

The bottom surface of the box is preferably formed by a front flap extending from the front surface towards the back surface, a back flap extending from the back surface towards the front surface, and first and second side flaps extending from the first and second side surfaces. Preferably, the bottom surface of the box is formed of interlocking front, back and side flaps in a so-called crash-lock design, in which, for example, one of the front and back flaps is first folded to the plane of the bottom surface, followed by the side flaps, followed finally by the other of the front and back flaps, and the finally folded flap locks the other flaps and itself in position in known manner.

In order to ensure that the wheels are sufficiently supported by the box, the parts of the box at the side surfaces where the wheels are mounted are preferably reinforced by one or more layers of the flat board material in addition to the layer that is constituted by each side surface. The reinforcing layers are provided by minor portions of the bottom surface or back surface, preferably the bottom surface, that have been cut from the bottom or back surface whilst remaining attached to the bottom or back surface along a portion of the side bottom or side back surface bottom edges of the box. Preferably, the reinforcing layers are provided by minor portions of the side flaps that have been cut from the side flaps whilst remaining attached to the side surfaces along a portion of the side bottom edges of the box. Each of the two cut-out portions may therefore be folded along its side bottom edge portion onto the adjoining side surface, whilst the remaining major portion of the side flap extends over, and defines part of, the bottom surface of the box. Thus, a first cut-out portion of the first side flap can be folded along the first side bottom edge onto the first side surface, and a second cut-out portion of the second side flap can be folded along the second side bottom edge onto the second side surface. It will be appreciated that each of the first and second cut-out portions must be near to the respective bottom back comers of the box where the wheels are to be mounted. If desired, the cut-out portions can be so cut as to be sufficiently long to be folded back onto themselves, in order to provide an additional reinforcing layer.

Each wheel is mounted by a short axle that extends through the side surface layer and one or more layers provided by the cut-out portions. Thus, the wheel mounting parts of the box are reinforced so that the weight of the box and contents can be fully supported by the wheels when the box is tilted, thereby preventing or reducing any damage that might be caused to the box or wheel mountings under heavy loads. It will be appreciated that each axle through which a corresponding wheel is mounted must be sufficiently short to enable the container to be collapsed to a substantially flat configuration. By contrast, if the wheels were to share a long, common axle extending through both sides of the box, the container would not be collapsible to a flat-pack form.

The wheels and short axles (herein also called stub axles) may be formed of any suitable material such as plastic, metal, wood or hard board, and may be retained in their reinforced mountings using any appropriate retaining means inside the box. For example, a backing plate or washer and a locking nut or retaining pin, fixed to the axle end, may be used to prevent inadvertent dislodging of the axle and wheel from the box during use.

The cut-out portions can be folded onto either the inside surface or onto the outside surface of their respective side surfaces, but preferably are folded onto the inside surface. Either way, each folded cut-out portion leaves behind a corresponding cut-out space in the side flap. To prevent box contents from escaping through the spaces, the back flap preferably is so configured as to overlap the cut-out spaces so as to ensure that the bottom of the box is fully closed off.

If desired, the reinforcing layers provided by the cut-out portions, and those parts of the side surfaces onto which the reinforcing layers are folded, are provided with one or more slit portions so that, when the cut-out portions have been folded over their respective side surfaces, the slit portions provide a slot that extends from the axle operating position to a side bottom edge or side back edge of the box. Thus, the slot enables a wheel axle to be introduced from the side bottom or side back edge, slid along the slot and retained in its operating position in a reinforced section, without having to be threaded through holes in the side surfaces and their respective reinforcing layers. In one embodiment, the slot is provided by a slit portion linking a hole for the axle in the side surface with a hole for the axle in a cut-out portion providing a reinforcing layer. It will be appreciated that the slot can be configured in any manner so as to ensure that the wheel on its axle is retained in an operable position when slid to its end position in the slot. For example, the slot may be configured as a straight, curved or bent, e.g. L-shaped line. The slot at or near its end is preferably so angled or bent, so that a wheel on its axle will not readily drop out of the slot from its operation position.

The container can be manufactured and sold in a collapsed, substantially flat configuration, preferably with wheels pre-assembled and mounted to the box, for convenient storage or transport as a flat-pack item. The collapsed flat-pack may be simply erected by a person on site for use, and, if desired, collapsed for storage and reuse. Additional reinforcement means such as adhesive tape, string or elastic may be used to further strengthen or seal the box, in conventional manner.

The invention will be further understood from the embodiment described below with reference to the drawings, in which:
Figure 1 represents a front top side perspective view of a mobile container according to a preferred embodiment of the invention;
Figure 2 represents a perspective view of the upper portion of the container shown in Figure 1, with the flaps shown in a different position;
Figure 3 represents a front top side perspective view (expanded) of the lower portion of the container shown in Figure 1;
Figure 4 represents a bottom view of the box of the container shown in Figure 1, with the bottom end depicted closed off;
Figure 5 represents a bottom view of the box shown in Figure 4, with the bottom end depicted open;
Figure 6 represents a section view showing a wheel mounting in a side surface of the box shown in Figure 3;
Figure 7 represents a section view (expanded) of the wheel mounting shown in Figure 6; and
Figure 8 represents a top side perspective view of a slotted wheel and axle mounting in a mobile container according to a preferred embodiment of the invention.

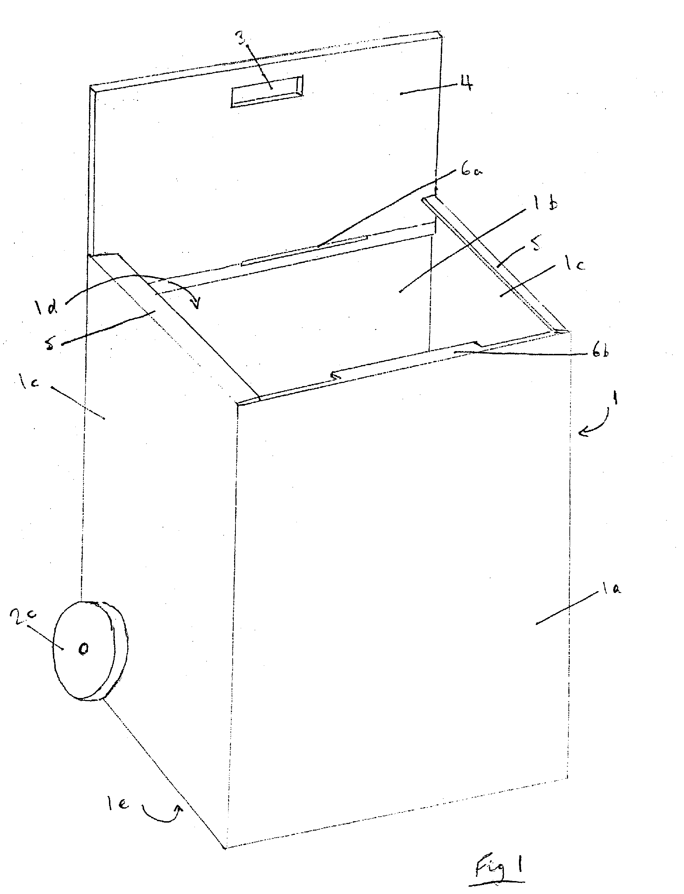

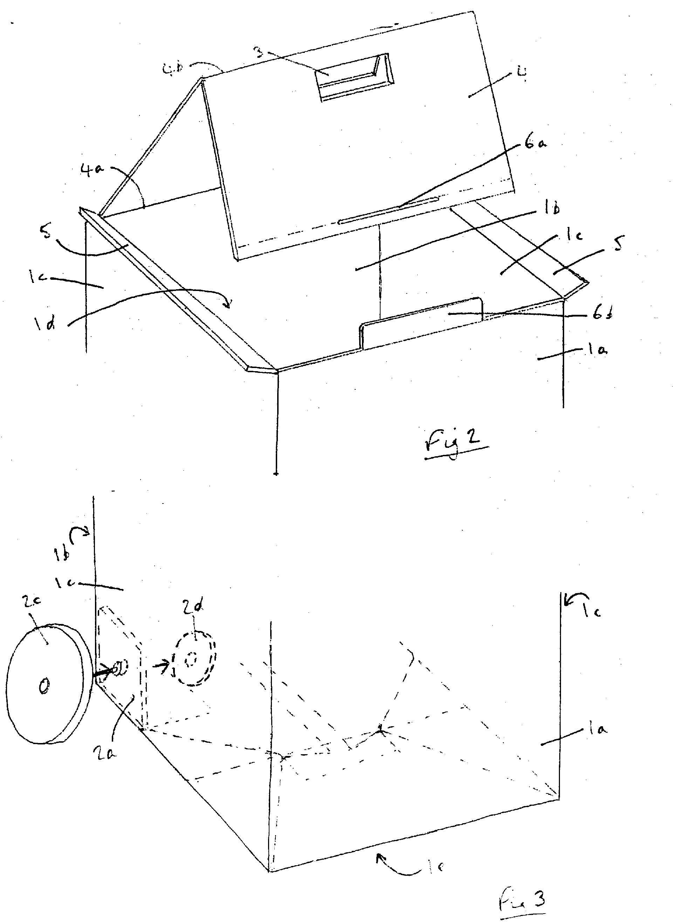

As shown in Figures 1 to 3, an integral sheet of corrugated cardboard is folded to an erected configuration, to form a box 1 having a front surface 1a, a back surface 1b side surfaces 1c, a top surface 1d and a bottom surface 1e. A wheel 2c is mounted on each side surface near to each bottom back comer of the box. The top surface 1d of the box 1 is formed by a top flap 4 extending from the back surface 1b towards the front surface 1a. The top flap 4 is pivotable about the edge 4a where the top flap 4 adjoins the back surface 1b and is foldable onto itself along a fold line 4b in the top flap 4. Two slotted cut-outs are provided in the top flap 4, one on each side of fold line 4b, so as to overlie one another to define a handle 3 when the top flap 4 is folded onto itself along the fold line 4b. Additional flaps 5 extending from the side surfaces 1c lock the folded portion of the top flap into position against itself. A slit 6a in the extreme end of the top flap 4 co-operates with a tongue extension 6b extending from the front surface 1a to retain the top flap 4, when unfolded, over the open top end of the box 1 to close off the box 1.

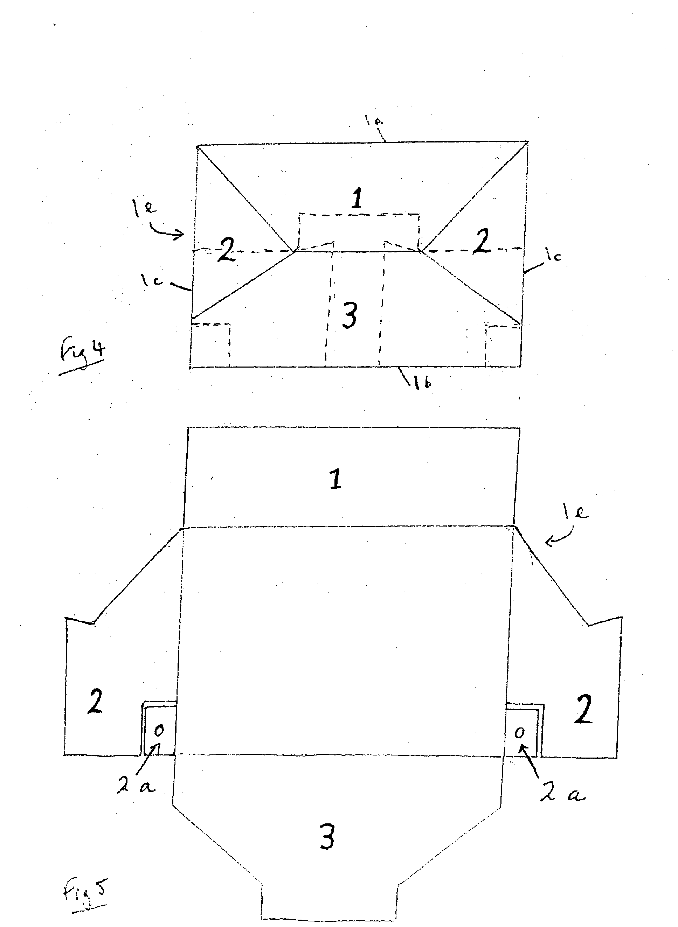

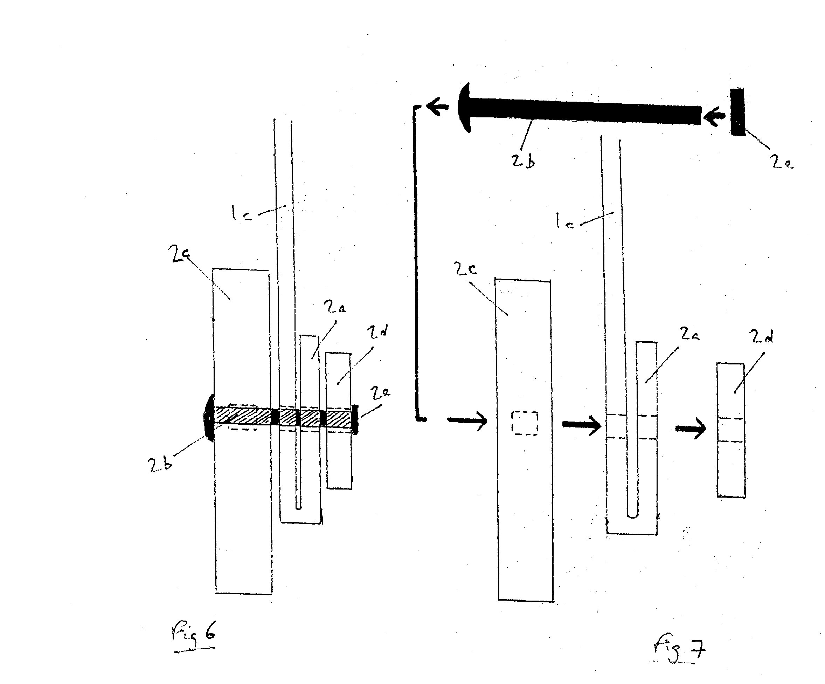

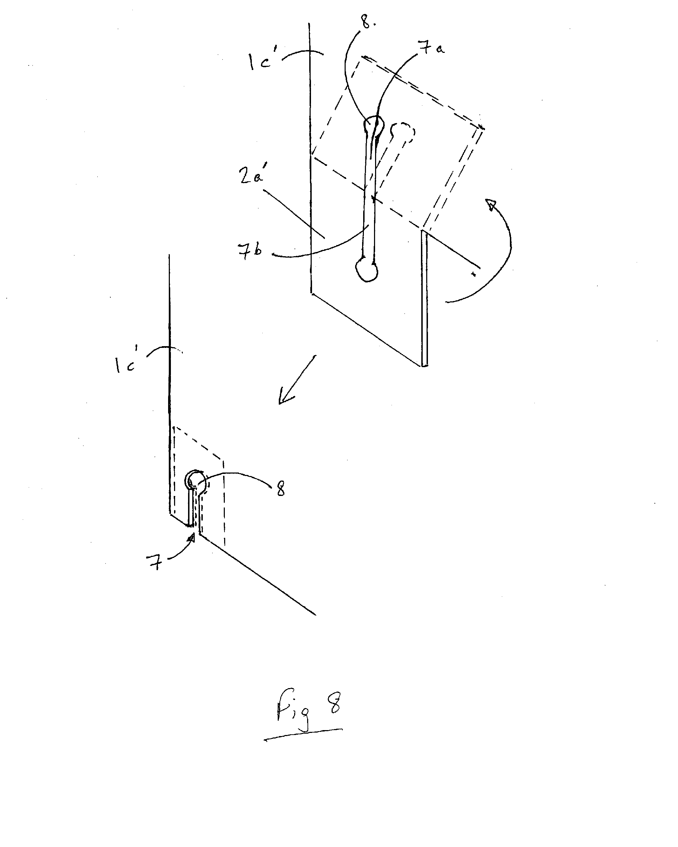

As shown in Figures 4 and 5, the bottom surface 1e of the box 1 is formed by a front flap 1 extending from the front surface 1a, a back flap 3 extending from the back surface 1b and side flaps 2 extending from the side surfaces 1c, in a crash-lock design. The front flap 1 is first folded to the plane of the bottom surface, followed by the side flaps 2, followed finally by the back flap 3. The back flap 3 has a lug extension that can tuck inside a portion of the front flap 1, thereby locking the front and side flaps 1 and 2, and itself, in position.

As shown in Figure 5, minor portions 2a of the side flaps are cut from the side flaps 2 but remain attached to the side surfaces along a portion of the side bottom edges of the box 1. Referring back to Figure 3, each minor cut-out portion 2a is folded inside the box 1 onto its adjoining side surface 1c to provide a reinforcing layer of corrugated cardboard at the side, near to the respective bottom back comer of the box, where the wheel 2 is mounted. Referring again to Figures 4 and 5, the back flap 3 is configured so as to overlap the cut-out spaces in the side flaps 2 that are left behind when the cut-out portions 2a are folded to the side surfaces 1c, so as to ensure that the bottom of the box 1 is fully closed off.

As shown in Figures 6 and 7, each plastic wheel 2c is mounted by a central stub axle 2b of metal that extends through the side surface 1c layer and the reinforcing cut-out portion 2a of the side flap. The wheel 2c and axle 2b are retained in their reinforced mounting by a backing plate or washer 2d and a locking nut 2e fixed to the axle end.

As shown in Figure 8, a slotted reinforced mounting for a wheel on its axle is provided by the reinforced section of the box having slit portions 7a and 7b in side surface 1c' and cut-out portion 2a'. When cut-out portion 2a' is folded to lie against side surface 1 c', the slit portions 7a, 7b define a slot 7 in the side bottom edge for introducing a stub axle having its wheel and backing plate or washer mounted thereon. In its operating position, the wheel axle is disposed at the end 8 of the slot. Thus, a user can easily assemble the wheels to the box by sliding the axle along slot 7 from the side bottom edge of the box to the end 8 of the slot.

## Claims

1. A mobile collapsible box container comprising:
a box having, in the erected configuration, opposed front and back surfaces, opposed first and second side surfaces, and opposed top and bottom surfaces;
a first wheel mounted on the first side surface proximate to the back and bottom surfaces;
a second wheel mounted on the second side surface proximate to the back and bottom surfaces; and
a handle provided in or proximate to the top surface.

2. A mobile container according to claim 1 wherein the top surface is formed by a top flap extending from the back surface towards the front surface, the top flap is pivotable about the top back edge and foldable onto itself along a fold line in the top flap parallel to the top back edge, and first and second slotted cut-outs are provided in the top flap one on each side of the fold line so as to overlie one another to define the handle when the top flap is folded onto itself along the fold line.

3. A mobile container according to claim 1 or claim 2 wherein the bottom surface is formed by a front flap extending from the front surface towards the back surface, a back flap extending from the back surface towards the front surface, and first and second side flaps extending from the first and second side surfaces;
a first cut-out portion of the first side flap proximate to the back surface is folded along the first side bottom edge onto the first side surface, a second cut-out portion of the second side flap proximate to the back surface is folded along the second side bottom edge onto the second side surface; and
the first wheel is mounted by a first stub axle extending through the first side surface and the first cut-out portion and the second wheel is mounted by a second stub axle extending through the second side surface and the second cut-out portion.

4. A mobile container according to claim 3 wherein the first and second cut-out portions are folded onto the inside surfaces of the first and second side surfaces.

5. A mobile container according to claim 3 or claim 4 wherein the back flap overlaps the cut-out spaces defined by the folded first and second cut-out portions.

6. A mobile container according to any preceding claim wherein the box is made of a flat board material selected from cardboard sheet, plastic sheet, corrugated cardboard or plastic corrugated board.

7. A mobile container according to claim 6 wherein the box is formed of a folded integral sheet of the flat board material.

8. A mobile container according to any preceding claim wherein the box is collapsible to a substantially flat configuration.

9. A mobile container according to any preceding claim wherein each wheel is mounted on a stub axle and the box has a slot in each side surface, said slot extending from the side bottom edge or side back edge for introducing the wheel mounted on its stub axle to its operating position.
